# EUROPEAN PATENT APPLICATION

(11) **EP 4 836 093 A1**
(43) Date of publication of application: **04.11.2026**
(21) Application number: 24921688.8
(22) Date of filing: 03.12.2024
(51) Int. Cl.: H01M 10/6556, F16L 23/18

(54) **PIPE JOINT, PIPE JOINT MOUNTING STRUCTURE AND ENERGY STORAGE APPARATUS**

(30) Priority: 02.02.2024 CN 202420266012 U
(71) Applicant: Contemporary Amperex Technology Co., Limited, Ningde, Fujian 352100 (CN)
(72) Inventor: SU, Haibin, Ningde, Fujian 352100 (CN); LI, Bulou, Ningde, Fujian 352100 (CN)
(74) Representative: Lorenz Seidler Gossel Part. mbB
(86) International application number: PCT/CN2024/136344
(87) International publication number: WO 2025/161666

(57) **Abstract**

Provided are a pipe joint, a pipe joint mounting structure and an energy storage apparatus. The pipe joint (10) comprises at least one connecting pipe (11); and a connector (12), which is sleeved on the at least one connecting pipe (11) and connected to the at least one connecting pipe (11), wherein at least one end of the connecting pipe (11) extends from the connector (12); and the size of the connector (12) in a first direction (X) is greater than the size of the connector (12) in a second direction (Y),the first direction (X) and the second direction (Y) respectively being perpendicular to the axial direction of the connecting pipe (11), and the first direction (X) being different from the second direction (Y). When the pipe joint (10) is mounted on a side wall of a box or a cabinet, the size of the connector (12) in the first direction (X) is greater than the size of the connector (12) in the second direction (Y), and the side of the connector (12) in the second direction (Y) can be closer to the position of a corner of the box or the cabinet, such that the probability of interference between the connector (12) and the box or the cabinet can be reduced; and the pipe joint (10) can be mounted and used in a relatively large space, and can also be used in a narrow space, thereby expanding the range of application of the connector (12).

## Description

### CROSS-REFERENCE TO RELATED APPLICATIONS

The present application claims priority to Chinese Patent Application No. 202420266012.8, filed on February 2, 2024 and entitled "PIPELINE JOINT, PIPELINE JOINT MOUNTING STRUCTURE AND ENERGY STORAGE DEVICE", which is incorporated herein by reference in its entirety.

### TECHNICAL FIELD

The present application relates to the technical field of pipeline connections, and in particular to a pipeline joint, a pipeline joint mounting structure, and an energy storage device.

### BACKGROUND

A pipeline joint is a component for providing a transitional connection between two mating pipelines. When used in some devices having limited space, such as a device including a box body or a cabinet body, the pipeline joint is typically mounted at a position close to a corner of the box body or cabinet body. At present, the existing problem is that existing pipeline joints have a limited range of application.

### SUMMARY

In view of the above problem, the present application provides a pipeline joint, a pipeline joint mounting structure, and an energy storage device, so as to improve the spatial application range of the pipeline joint.

According to a first aspect, the present application provides a pipeline joint, including:
at least one connecting pipe; and
a connecting member, where the connecting member is sleeved over and connected to the at least one connecting pipe, at least one end of the connecting pipe extends out of the connecting member, a dimension of the connecting member along a first direction is greater than a dimension of the connecting member along a second direction, the first direction and the second direction are perpendicular to an axial direction of the connecting pipe respectively, and the first direction is different from the second direction.

When a mounting hole formed in a side wall of a box body or a cabinet body is used to mount the connecting member, if a distance between the mounting hole and another side wall adjacent to the side wall is relatively small, the dimension of the connecting member along the first direction is greater than the dimension of the connecting member along the second direction; compared with a circular flange structure of the connecting member, one side of the connecting member along the second direction can provide clearance for the adjacent another side wall, thereby reducing a probability of interference between the connecting member and the box body or the cabinet body during mounting of the connecting member, such that a pipeline joint of the same specification can be mounted and used not only in a relatively large space but also in a relatively narrow space, thereby improving the application range of the connecting member.

In some embodiments, the connecting member includes a flange plate. Accordingly, mounting of the connecting member (such as a box body, a cabinet body or a bracket) is facilitated.

In some embodiments, a sealing groove surrounding the connecting pipe is formed at one end of the connecting member. Accordingly, by disposing a sealing ring in the sealing groove, sealing between the connecting member and a component connected thereto can be achieved.

In some embodiments, a plurality of connecting pipes and a plurality of sealing grooves are provided, and each sealing groove surrounds a respective connecting pipe.

Accordingly, circumferential sealing of the plurality of connecting pipes can be achieved through the plurality of sealing grooves.

In some embodiments, a thermal insulation layer is provided on the outer peripheral surface of at least one side of the connecting pipe along an axial direction of the connecting pipe. When the pipeline joint is in use after being mounted in a component such as a wall, a cabinet body, or a box body, the pipeline joint may exchange heat with the component such as the wall, the cabinet body, or the box body. The thermal insulation layer can be used to reduce heat exchange between the pipeline joint and the component such as the wall, the cabinet body, or the box body, thereby reducing heat loss or cooling loss of a heat exchange medium in the pipeline joint.

In some embodiments, an engaging groove surrounding an axis of the connecting pipe is formed in an outer peripheral surface of the connecting pipe. The engaging groove facilitates engaging the connecting pipe into a mating pipeline or a mating pipeline accessory connected thereto, thereby facilitating connection.

In some embodiments, the at least one connecting pipe and the connecting member are integrally formed. Accordingly, a process of assembling and connecting the connecting pipe and the connecting member may be omitted, so as to improve mounting efficiency during construction.

According to a second aspect, the present application provides a pipeline joint mounting structure, including:
a joint fixing member; and
the pipeline joint according to the first aspect, where the connecting pipe extends through the joint fixing member, and the joint fixing member is connected to the connecting member.

Since the pipeline joint mounting structure includes the pipeline joint according to the first aspect, the same effects as described above are achieved and will not be repeated herein.

In some embodiments, the joint fixing member includes a fixing member body and a mounting portion. The mounting portion extends through the fixing member body along an axial direction of the connecting pipe, the connecting member is connected to the mounting portion, and at least one end of the connecting pipe extends out of the mounting portion. Accordingly, the mounting portion may first be connected to the fixing member body, and then the connecting member may be connected to the mounting portion, thereby facilitating assembly.

In some embodiments, the mounting portion includes an end cover and a cylindrical structure. The end cover is connected to one end of the cylindrical structure, the connecting member is located in a cavity of the cylindrical structure and is connected to the end cover, a through hole communicating with the cavity is formed in an outer surface of the end cover, and the connecting pipe extends through the through hole and is connected to the end cover. During mounting, one end of the connecting pipe may be inserted through the cavity and pass through the through hole, and then the connecting member is connected to the end cover. Accordingly, the provision of the cavity allows the connecting pipe to extend a relatively long length out of the end cover, thereby facilitating connection between the connecting pipe and an external pipeline.

In some embodiments, the pipeline joint mounting structure further includes a fastener, a mounting hole is formed in an outer surface of the end cover, the mounting hole is spaced apart from the through hole, and one end of the fastener extends through the mounting hole and is connected to the connecting member. Accordingly, the fastener facilitates connection and fixation between the joint fixing member and the connecting member.

In some embodiments, along the axial direction of the connecting pipe, the end cover is flush with an outer surface of the fixing member body; or, along the axial direction of the connecting pipe, at least part of the end cover protrudes from the outer surface of the fixing member body. During mounting of the pipeline joint, the connecting pipe may be vertically mounted at the top of a cabinet body or a box body, such that condensed water may flow from a surface of the mounting portion to a surface of the fixing member body, thereby reducing accumulation of condensed water on the surface of the fixing member body and reducing a probability that condensed water penetrates from the pipeline joint into the interior of the box body or the cabinet body.

In some embodiments, the pipeline joint mounting structure further includes a sealing ring, a sealing groove surrounding the connecting pipe is formed at one end of the connecting member, and the sealing ring is located in the sealing groove and abuts against the joint fixing member. Accordingly, circumferential sealing of the connecting pipe can be achieved through the sealing ring.

According to a third aspect, the present application provides an energy storage device, including the pipeline joint mounting structure according to the second aspect, where the joint fixing member is part of a wall body of a box body in the energy storage device.

Since the pipeline joint mounting structure includes the pipeline joint mounting structure according to the second aspect, the same effects as described above are achieved and will not be repeated herein.

The above description is merely an overview of the technical solution of the present application. For a better understanding of the technical means in the present application such that they can be implemented according to the content of the specification, and to make the above and other objectives, features, and advantages of the present application more obvious and easier to understand, the following describes specific embodiments of the present application.

### BRIEF DESCRIPTION OF DRAWINGS

By reading the detailed description of the preferred embodiments below, various other advantages and benefits will become clear to those of ordinary skill in the art. The drawings are only used for the purpose of illustrating the preferred embodiments and are not considered to limit the present application. Moreover, in all the drawings, the same components are denoted by the same reference numerals. In the drawings:
FIG. 1 is an exploded view of a pipeline joint according to some embodiments of the present application;
FIG. 2 is a top view of a pipeline joint according to some embodiments of the present application;
FIG. 3 is an axonometric view of a pipeline joint according to some embodiments of the present application;
FIG. 4 is an exploded view of a pipeline joint mounting structure according to some embodiments of the present application;
FIG. 5 is a side view of a pipeline joint mounting structure according to some embodiments of the present application;
FIG. 6 is a cross-sectional view taken along line A-A of FIG. 5;
FIG. 7 is a cross-sectional view of a hose connected to a pipeline joint mounting structure (a cross section passing through an axis of a connecting pipe);
FIG. 8 is an axonometric view of a pipeline joint mounting structure according to some embodiments of the present application;
FIG. 9 is an exploded view of a mounting portion of a joint fixing member according to some embodiments of the present application; and
FIG. 10 is an axonometric view of an energy storage device according to some embodiments of the present application.

Reference numerals of the drawings in the specific embodiments are as follows:
100. energy storage device;
10. pipeline joint; 11. connecting pipe; 112. engaging groove; 12. connecting member; 121. sealing groove; 122. connecting hole; 13. sealing ring; 14. thermal insulation layer; 15. hose; 16. clamp;
20. joint fixing member; 21. fixing member body; 22. mounting portion; 221. cylindrical structure; 222. end cover; 2221. through hole; 2222. mounting hole;
30. fastener;
40. battery;
50. input pipe;
60. output pipe;
70. energy storage cabinet;
80. heat exchange member;
X. first direction; and Y. second direction.

### DESCRIPTION OF EMBODIMENTS

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as those generally understood by those skilled in the technical field of the present application; the terms used herein are only for the purpose of describing specific embodiments and are not intended to limit the present application; the terms "include", "comprise", and "have" and any variations thereof in the description and claims of the present application and the above drawings are intended to cover non-exclusive inclusions.

In the description of the embodiments of the present application, the technical terms "first", "second", and the like are only used to distinguish different objects, and cannot be understood as indicating or implying relative importance or implicitly indicating the number, specific order or primary-secondary relationship of the indicated technical features. In the description of the embodiments of the present application, "plurality" means two or more, unless otherwise clearly and specifically defined.

Reference herein to an "embodiment" means that a specific feature, structure or characteristic described in conjunction with the embodiment may be included in at least one embodiment of the present application. The appearance of the phrase in various positions in the description does not necessarily refer to the same embodiment, nor is it an independent or alternative embodiment mutually exclusive with other embodiments. It is explicitly and implicitly understood by those skilled in the art that the embodiments described herein can be combined with other embodiments.

In the description of the embodiments of the present application, the term "and/or" is only a description of an association relationship of associated objects, indicating that three relationships can exist. For example, A and/or B can mean: A exists alone, A and B exist at the same time, and B exists alone. In addition, the character "/" in this document generally indicates that the front and rear associated objects are in an "or" relationship.

In the description of the embodiments of the present application, the term "plurality" refers to two or more (including two), and similarly, " plurality of groups" refers to two or more groups (including two groups), and " plurality of pieces" refers to two or more pieces (including two pieces).

In the description of the embodiments of the present application, the orientation or positional relationships indicated by technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the drawings, and are only for the convenience of describing the embodiments of the present application and simplifying the description, and do not indicate or imply that the referred device or element must have a specific orientation, be constructed and operated in a specific orientation, and therefore cannot be understood as a limitation on the embodiments of the present application.

In the description of the embodiments of the present application, unless otherwise clearly specified and limited, the technical terms "mount", "connect", "link", "fix", and the like should be understood in a broad sense. For example, the connection may be a fixed connection, a detachable connection, or an integral connection; may be a mechanical connection or an electrical connection; may be a direct connection, or an indirect connection through an intermediate medium, and may be an internal communication between two elements or an interaction relationship between two elements. For those of ordinary skill in the art, the specific meanings of the above terms in the embodiments of the present application can be understood according to specific circumstances.

A pipeline joint is a component for providing a transition connection between two mating pipelines. When used in some devices having limited space, such as a device including a box body or a cabinet body, the pipeline joint is typically mounted at a position close to a corner of the box body or cabinet body, such that pipelines inside the device may be arranged close to the corner position, thereby allowing a relatively large space to remain inside the device for accommodating components (such as a container, a tank, or a battery). The pipelines inside the device need to be led out of the device. To facilitate mounting of pipelines inside and outside the device, the pipeline joint may be mounted on the box body or cabinet body of the device, with one end of the pipeline joint connected to the internal pipelines and the other end connected to the external pipelines, thereby facilitating mounting. At present, the existing problem is that existing pipeline joints have a limited range of application. When the pipeline inside the device needs to be led out at a position close to the corner position of the box body or cabinet body, the pipeline joint is prone to interference when mounted on the box body or cabinet body.

In view of this, the present application provides a pipeline joint. When the pipeline joint is mounted on a side wall of a box body or a cabinet body, a dimension of a connecting member along a first direction is greater than a dimension of the connecting member along a second direction. As compared with a connecting member having a circular flange structure, one side of the connecting member along the second direction may be arranged closer to a corner position of the box body or the cabinet body, thereby reducing a probability of interference between the connecting member and the box body or the cabinet body, such that the pipeline joint can be mounted and used not only in a larger space but also be used in a narrow space, thereby improving the application range of the connecting member.

The pipeline joint provided in the present application may be mounted and fixed onto, but is not limited to being mounted and fixed onto, objects such as a wall, a container, a box body, a cabinet body, or a frame body.

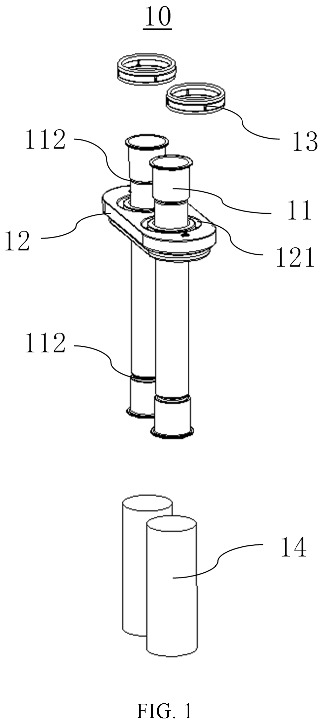

For the convenience of description, the following embodiments are described by taking a pipeline joint 10 according to some embodiments of the present application as an example with reference to FIG. 1 to FIG. 3.

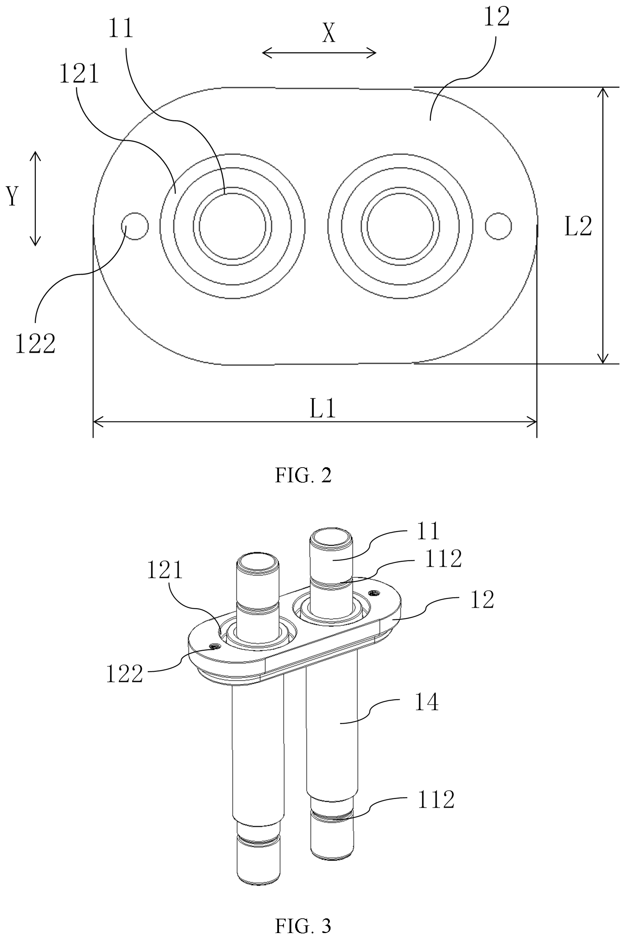

Referring to FIG. 1 and FIG. 2, the pipeline joint 10 includes a connecting member 12 and at least one connecting pipe 11. The connecting member 12 is sleeved over and connected to the at least one connecting pipe 11. At least one end of the connecting pipe 11 extends out of the connecting member 12. A dimension of the connecting member 12 along a first direction X is greater than a dimension of the connecting member 12 along a second direction Y. The first direction X and the second direction Y are perpendicular to an axial direction of the connecting pipe 11 respectively. The first direction X is different from the second direction Y.

The projection of the connecting member 12 on a cross section of the connecting pipe 11 may have, but is not limited to, a rectangular, elliptical, or other strip-shaped plate-like structure.

An included angle between the first direction X and the second direction Y may be 90°, or may be less than 90°.

The connection between the connecting pipe 11 and the connecting member 12 includes, but is not limited to, threaded connection or welding.

A material of the pipeline joint 10 includes, but is not limited to, a metal material or a plastic material.

When the pipeline joint 10 is mounted on a side wall of a box body or a cabinet body, the dimension of the connecting member 12 along the first direction X is greater than the dimension of the connecting member 12 along the second direction Y. As compared with the connecting member 12 having a circular flange structure, one side of the connecting member 12 along the second direction Y may be arranged closer to a corner position of the box body or the cabinet body, thereby reducing a probability of interference between the connecting member 12 and the box body or the cabinet body, such that the pipeline joint 10 can be mounted and used not only in a relatively large space but also in a narrow space, thereby improving the application range of the connecting member 12.

In some embodiments, the connecting member 12 includes a flange plate. The dimension of the connecting member 12 along the first direction X is greater than the dimension thereof along the second direction Y, and the formed flange plate is a special-shaped flange plate. Optionally, an outer contour shape of a projection of the flange plate on a first plane may be, but is not limited to, a rectangle or an ellipse, and the first plane is perpendicular to an axis of the connecting pipe 11.

In some embodiments, referring to FIG. 1 to FIG. 3, a sealing groove 121 surrounding the connecting pipe 11 is formed at one end of the connecting member 12.

When a plurality of the connecting pipes 11 are provided, one or more sealing grooves 121 may be provided at one end of the connecting member 12, that is, one sealing groove 121 may surround all the connecting pipes 11, or each connecting pipe 11 may be surrounded by one sealing groove 121.

During mounting of the pipeline joint 10, a sealing ring 13 may be disposed in the sealing groove 121, and the sealing ring 13 is used to seal between the connecting member 12 and a component connected to the connecting member 12.

Optionally, the sealing ring 13 may be a rubber or silicone sealing ring 13.

The sealing ring 13 is received in the sealing groove 121. In the sealing ring 13, a part of the sealing ring 13 may protrude from the sealing groove 121, such that, during mounting, the connecting member 12 can compress the sealing ring 13, enabling the sealing ring 13 to provide good sealing effect.

Accordingly, by disposing the sealing ring 13 in the sealing groove 121, sealing between the connecting member 12 and a component connected thereto can be achieved.

In some embodiments, referring to FIG. 1, a plurality of connecting pipes 11 and a plurality of sealing grooves 121 are provided, and each sealing groove 121 surrounds a respective connecting pipe 11.

Accordingly, circumferential sealing of the plurality of connecting pipes 11 can be achieved through the plurality of sealing grooves 121.

In some embodiments, referring to FIG. 1 and FIG. 3, a thermal insulation layer 14 is provided on the outer peripheral surface of at least one side of the connecting pipe 11 along an axial direction of the connecting pipe 11.

Optionally, the thermal insulation layer 14 may be formed from materials including, but not limited to, asbestos, rock wool, foamed polyurethane, or foamed ceramic materials.

Taking mounting of the pipeline joint 10 on a wall as an example, the connecting pipe 11 extends through the wall, and the thermal insulation layer 14 is located within the wall. When a heat exchange medium passes through the connecting pipe 11, the thermal insulation layer 14 may reduce heat exchange between the connecting pipe 11 and the wall, thereby reducing heat loss or cooling loss of the connecting pipe 11.

When the pipeline joint 10 is in use after being mounted in a component such as a wall, a cabinet body, or a box body, the pipeline joint 10 may exchange heat with the component such as the wall, the cabinet body, or the box body. The thermal insulation layer 14 may be used to reduce heat exchange between the connecting pipe 11 of the pipeline joint 10 and the component such as the wall, the cabinet, or the box body, thereby reducing heat loss or cooling loss of the heat exchange medium in the pipeline joint 10.

In some embodiments, referring to FIG. 3, an engaging groove 112 surrounding an axis of the connecting pipe 11 is formed in an outer peripheral surface of the connecting pipe 11.

The engaging groove 112 may be arranged close to an end of the connecting pipe 11, and the specific arrangement may be determined according to mounting requirements of the connecting pipe 11 and the mating pipeline.

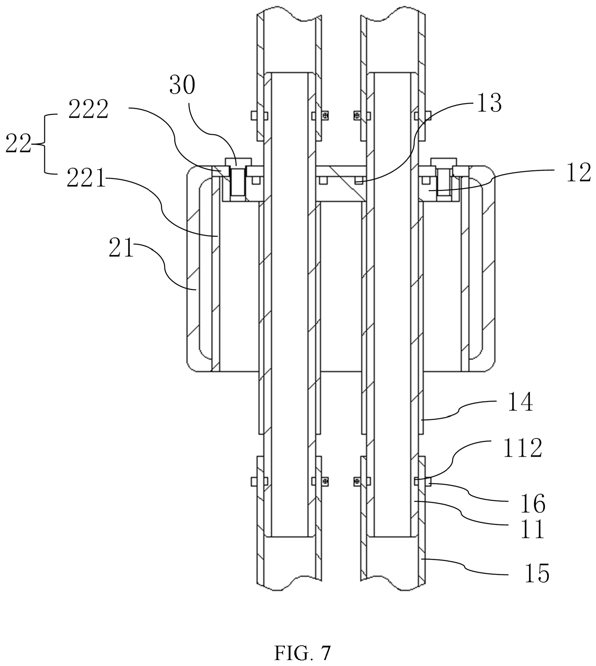

Optionally, referring to FIG. 7, pipelines mated with the pipeline joint 10 are hoses 15. A hose 15 is sleeved over each end of the connecting pipe 11 and covers the engaging groove 112. A clamp 16 is sleeved over an outer surface of the hose 15, and the clamp 16 secures the hose 15 in engagement with the engaging groove 112, such that the hose 15 is fixed onto the outer peripheral surface of the connecting pipe 11.

The provision of the engaging groove 112 facilitates engaging the connecting pipe 11 into a mating pipeline (such as the hose 15) or a mating pipeline accessory connected thereto, thereby facilitating connection of the pipeline joint 10.

In some embodiments, referring to FIG. 3, the at least one connecting pipe 11 and the connecting member 12 are integrally formed.

Optionally, the connecting pipe 11 and the connecting member 12 may be integrally formed by casting or injection molding.

Accordingly, a process of assembling and connecting the connecting pipe 11 and the connecting member 12 can be omitted, thereby improving mounting efficiency during construction.

In some embodiments, referring to FIG. 3, a connecting hole 122 is formed at one end of the connecting member 12 along an axial direction of the connecting pipe 11.

The connecting hole 122 includes, but is not limited to, a threaded hole, a bolt hole, or a rivet hole.

The connecting member 12 is provided with the connecting hole 122, which can facilitate fixing the connecting member 12 onto a component such as a wall or a container.

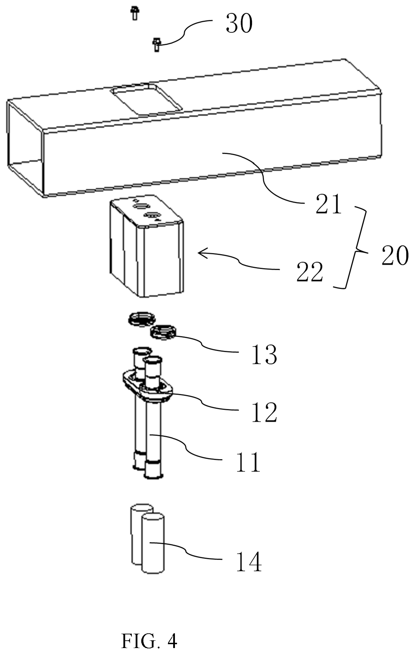

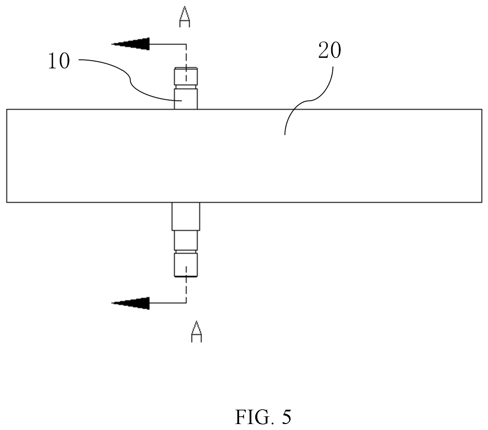

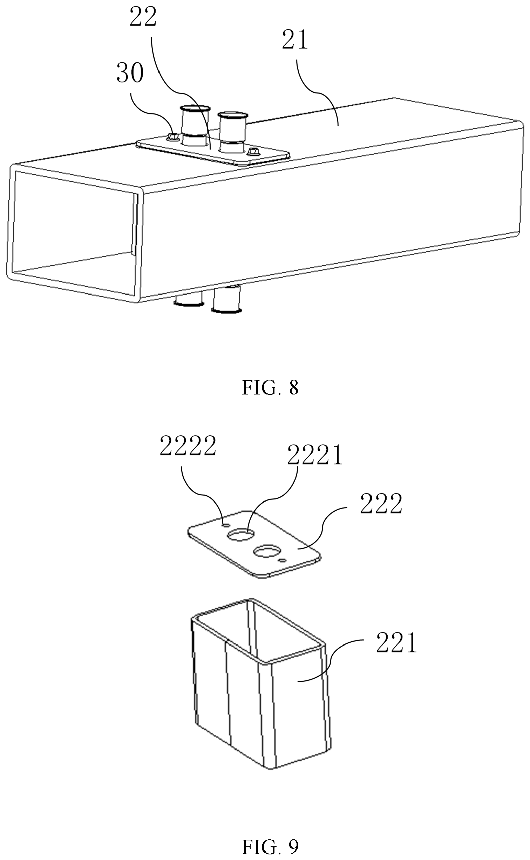

For the convenience of description, the following embodiments are described by taking a pipeline joint mounting structure according to some embodiments of the present application as an example with reference to FIG. 4 to FIG. 9.

The pipeline joint mounting structure includes a joint fixing member 20 and the pipeline joint 10 of the above embodiments. The connecting pipe 11 extends through the joint fixing member 20, and the joint fixing member 20 is connected to the connecting member 12.

The joint fixing member 20 includes, but is not limited to, a wall, a bracket, or a container.

The connection between the joint fixing member 20 and the connecting hole 122 includes, but is not limited to, bolt connection, riveting, or screw connection.

Since the pipeline joint mounting structure includes the pipeline joint 10 according to the above embodiments, the same effects as described above are achieved and will not be repeated herein.

In some embodiments, referring to FIG. 4 to FIG. 6, the joint fixing member 20 includes a fixing member body 21 and a mounting portion 22. The mounting portion 22 extends through the fixing member body 21 along an axial direction of the connecting pipe 11, the connecting member 12 is connected to the mounting portion 22, and at least one end of the connecting pipe 11 extends out of the mounting portion 22.

Optionally, the connection between the fixing member body 21 and the mounting portion 22 includes, but is not limited to, snap-fit engagement, welding, riveting, or bolt connection.

Illustratively, along the axial direction of the connecting pipe 11, an insertion hole is formed at one end of the fixing member body 21. The insertion hole penetrates through two side surfaces of the fixing member body 21 along the axial direction of the connecting pipe 11. The mounting portion 22 is inserted into the insertion hole, and one end of the mounting portion 22 protrudes beyond one end of the connecting pipe 11. Optionally, the fixing member body 21 and the mounting portion 22 are both metal parts and are connected by welding. To be specific, optionally, the fixing member body 21 may be a square tube, one side wall of the square tube is provided with an insertion hole, the insertion hole penetrates through another side wall opposite to the side wall, and the square tube may be formed as part of a wall body of a box body or a cabinet body.

Accordingly, the mounting portion 22 may be connected to the fixing member body 21 first, and then the connecting pipe 11 is connected to the mounting portion 22, thereby facilitating assembly.

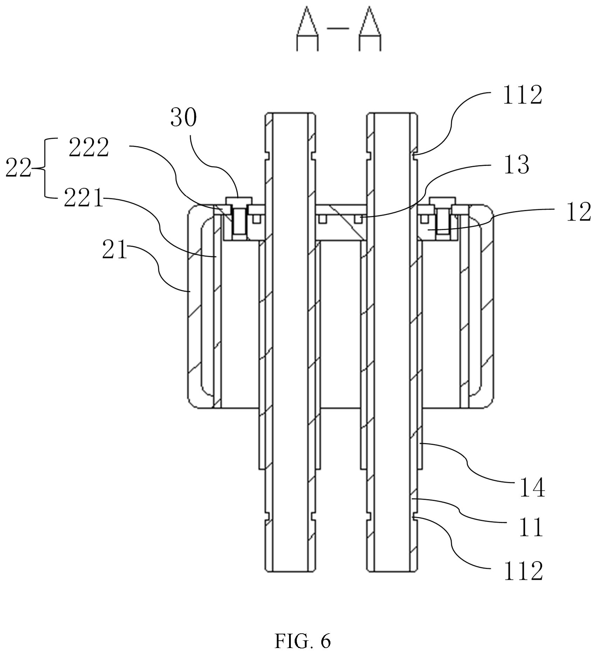

In some embodiments, referring to FIG. 6 to FIG. 9, the mounting portion 22 includes an end cover 222 and a cylindrical structure 221. The end cover 222 is connected to one end of the cylindrical structure 221. The connecting member 12 is located in a cavity of the cylindrical structure 221 and is connected to the end cover 222. A through hole 2221 communicating with the cavity is formed in an outer surface of the end cover 222, and the connecting pipe 11 extends through the through hole 2221.

A diameter of the through hole 2221 may be slightly larger than an outer diameter of the connecting pipe 11, so as to facilitate passage of the connecting pipe 11 through the through hole 2221.

The connection between the connecting member 12 and the end cover 222 includes, but is not limited to, welding, screw connection, or adhesive bonding.

During mounting, one end of the connecting pipe 11 may pass through the cavity and the through hole 2221, and then the connecting member 12 is connected to the end cover 222. Therefore, the provision of the cavity allows the connecting pipe 11 to extend a relatively long length out of the end cover 222, thereby facilitating connection between the connecting pipe 11 and an external pipeline.

In some embodiments, referring to FIG. 6, the pipeline joint mounting structure further includes a fastener 30, a mounting hole 2222 is formed in an outer surface of the end cover 222, the mounting hole 2222 is spaced apart from the through hole 2221, and one end of the fastener 30 extends through the mounting hole 2222 and is connected to the connecting member 12.

The fastener 30 includes, but is not limited to, a screw, a rivet, or a bolt assembly.

The connection between the fastener 30 and the connecting member 12 includes, but is not limited to, riveting, thread connection, or bolt connection.

Accordingly, the fastener 30 facilitates connection and fixation between the joint fixing member 20 and the connecting member 12.

In some embodiments, the pipeline joint mounting structure further includes a sealing ring 13, a sealing groove 121 surrounding the connecting pipe 11 is formed at one end of the connecting member 12, the sealing ring 13 is located in the sealing groove 121 and abuts against the joint fixing member 20. Accordingly, circumferential sealing of the connecting pipe 11 can be achieved through the sealing ring 13.

In some embodiments, referring to FIG. 6, along an axial direction of the connecting pipe 11, the end cover 222 is flush with an outer surface of the fixing member body 21; or, along the axial direction of the connecting pipe 11, at least part of the end cover 222 protrudes from the outer surface of the fixing member body 21.

Illustratively, the end cover 222 may be disposed in the above insertion hole and is flush with or partially protruding beyond the outer surface of the fixing member body 21. In other examples, the end cover 222 may alternatively be disposed outside the fixing member body 21, that is, along the axial direction of the connecting pipe 11, two ends of the cylindrical structure 221 extend from outer surfaces of two sides of the fixing member body 21.

During mounting of the pipeline joint 10, the connecting pipe 11 may be vertically mounted at the top of a cabinet body or a box body, such that condensed water may flow from a surface of the mounting portion 22 to a surface of the fixing member body 21, thereby reducing accumulation of condensed water on the surface of the fixing member body 21 and reducing a probability that condensed water penetrates from the pipeline joint 10 into the interior of the box body or the cabinet body.

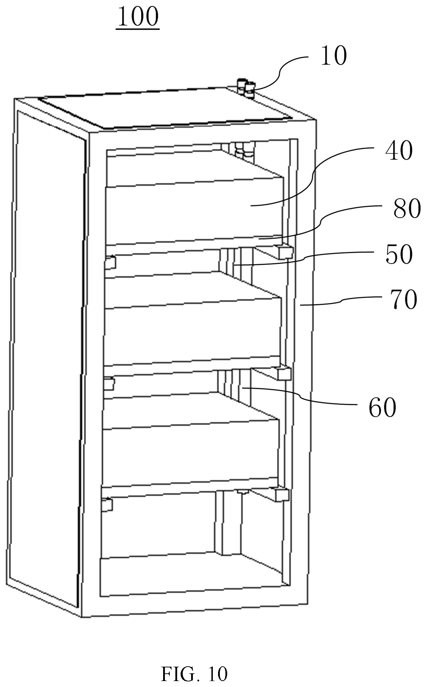

For the convenience of description, the following embodiments are described by taking an energy storage device 100 according to some embodiments of the present application as an example with reference to FIG. 10.

The energy storage device 100 includes the pipeline joint mounting structure of the above embodiment, and the joint fixing member 20 is part of a wall body of a box body in the energy storage device 100.

Optionally, the energy storage device 100 includes an energy storage cabinet 70, a battery 40, and a heat exchange member 80, where the battery 40 is located in the energy storage cabinet 70. To regulate the temperature of the battery 40, the heat exchange member 80 may be disposed at the bottom of the battery 40. The heat exchange member 80 may be a heat exchange tube or a water-cooling plate. Two connecting pipes 11 are provided in the joint fixing member 20. An input end of the heat exchange member 80 is communicated with one connecting pipe 11 via an input pipe 50, and an output end of the heat exchange member 80 is communicated with another connecting pipe 11 via an output pipe 60. To enable the battery 40 to have sufficient placement space in the energy storage cabinet 70, the input pipe 50 and the output pipe 60 are arranged between the battery 40 and a side wall of the energy storage cabinet 70, such that ends of the input pipe 50 and the output pipe 60 connected to the connecting pipes 11 are close to a corner position of the energy storage cabinet 70. The two connecting pipes 11 may be respectively communicated with a water tank (not shown in the figure) through pipelines at respective ends thereof located outside the energy storage cabinet 70, and a water pump (not shown in the figure) is mounted on the pipelines.

Optionally, the joint fixing member 20 may be mounted on a side wall, a top wall or a bottom wall of the energy storage cabinet 70. FIG. 10 illustrates a structural diagram of the joint fixing member 20 mounted on the top wall of the energy storage cabinet 70.

Since the pipeline joint mounting structure includes the pipeline joint mounting structure of the above embodiment, the effects thereof are the same as those described above and will not be repeated here.

In an optional embodiment of the pipeline joint mounting structure, referring to FIG. 1 to FIG. 5, the pipeline joint mounting structure includes a pipeline joint 10, a fastener 30, and a joint fixing member 20. The pipeline joint 10 includes a connecting member 12 and at least one connecting pipe 11. The connecting member 12 is sleeved over the at least one connecting pipe 11. All connecting pipes 11 are integrally formed with the connecting member 12, and the connecting pipes 11 extend from two ends of the connecting pipes 11. A dimension of the connecting member 12 along a first direction X is greater than a dimension of the connecting member 12 along a second direction Y. The first direction X and the second direction Y are the same as a radial direction of the connecting pipe 11 respectively. The first direction X is different from the second direction Y. The connecting member 12 may be a flange plate. A sealing groove 121 surrounding the connecting pipe 11 is formed at one end of the connecting member 12, and a sealing ring 13 is arranged in the sealing groove 121. A thermal insulation layer 14 is provided on the outer peripheral surface of at least one side of the connecting pipe 11 along an axial direction of the connecting pipe 11. An engaging groove 112 surrounding an axis of the connecting pipe 11 is formed in an outer peripheral surface of the connecting pipe 11. A connecting hole 122 is formed at one end of the connecting member 12 along the axial direction of the connecting pipe 11, and the connecting hole 122 is a threaded hole. The joint fixing member 20 includes a fixing member body 21 and a mounting portion 22. The mounting portion 22 extends through the fixing member body 21 along the axial direction of the connecting pipe 11, the connecting member 12 is connected to the mounting portion 22, and at least one end of the connecting pipe 11 extends out of the mounting portion 22. The mounting portion 22 includes an end cover 222 and a cylindrical structure 221, the end cover 222 is connected to one end of the cylindrical structure 221, the connecting member 12 is located in a cavity of the cylindrical structure 221 and is connected to the end cover 222, a through hole 2221 is formed in an outer surface of the end cover 222, and the connecting pipe 11 extends through the through hole 2221. A mounting hole 2222 is formed in an outer surface of the end cover 222, the mounting hole 2222 is spaced apart from the through hole 2221, and one end of the fastener 30 extends through the mounting hole 2222 and is threadedly connected to the connecting member 12.

When the pipeline joint 10 is mounted on a side wall of a box body or a cabinet body, a dimension of the connecting member 12 along a first direction X is greater than a dimension of the connecting member 12 along a second direction Y. As compared with the connecting member 12 having a circular flange structure, one side of the connecting member 12 along the second direction Y may be arranged closer to a corner position of the box body or the cabinet body, thereby reducing a probability of interference between the connecting member 12 and the box body or the cabinet body, such that the pipeline joint 10 can be mounted and used not only in a relatively large space but also in a narrow space, thereby improving the application range of the connecting member 12. The sealing ring 13 can play a role of circumferential sealing. When the joint fixing member 20 serves as a wall, or as part of a wall body of a closed chamber, the joint fixing member 20 can block mutual circulation of internal and external air, thereby reducing generation of condensed water when there is a temperature difference between the internal and external air. The provision of the engaging groove 112 facilitates connection between the connecting pipe 11 and a mating pipeline. The threaded connection between the fastener 30 and the connecting hole 122 facilitates mounting and fixation of the pipeline joint 10.

In conclusion, it should be noted that the above embodiments are for description of the technical solutions of the present application only rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A pipeline joint, comprising:
at least one connecting pipe; and
a connecting member, wherein the connecting member is sleeved over the at least one connecting pipe and connected to the at least one connecting pipe; at least one end of the connecting pipe extends out of the connecting member; a dimension of the connecting member along a first direction is greater than a dimension of the connecting member along a second direction; the first direction and the second direction are perpendicular to an axial direction of the connecting pipe respectively; and the first direction is different from the second direction.

2. The pipeline joint according to claim 1, wherein the connecting member comprises a flange plate.

3. The pipeline joint according to claim 1 or 2, wherein a sealing groove surrounding the connecting pipe is formed at one end of the connecting member.

4. The pipeline joint according to claim 3, wherein a plurality of connecting pipes and a plurality of sealing grooves are provided, and each sealing groove surrounds a respective connecting pipe.

5. The pipeline joint according to any one of claims 1 to 4, wherein a thermal insulation layer is provided on an outer peripheral surface of the connecting pipe.

6. The pipeline joint according to any one of claims 1 to 5, wherein an engaging groove surrounding an axis of the connecting pipe is formed in an outer peripheral surface of the connecting pipe.

7. The pipeline joint according to any one of claims 1 to 6, wherein the at least one connecting pipe and the connecting member are integrally formed.

8. A pipeline joint mounting structure, comprising:
a joint fixing member; and
the pipeline joint according to any one of claims 1 to 7, wherein the connecting pipe extends through the joint fixing member, and the joint fixing member is connected to the connecting member.

9. The pipeline joint mounting structure according to claim 8, wherein the joint fixing member comprises a fixing member body and a mounting portion, the mounting portion extends through the fixing member body along an axial direction of the connecting pipe, the connecting member is connected to the mounting portion, and at least one end of the connecting pipe extends out of the mounting portion.

10. The pipeline joint mounting structure according to claim 9, wherein the mounting portion comprises an end cover and a cylindrical structure, the end cover is connected to one end of the cylindrical structure, the connecting member is located in a cavity of the cylindrical structure and is connected to the end cover, a through hole communicating with the cavity is formed in an outer surface of the end cover, and the connecting pipe extends through the through hole.

11. The pipeline joint mounting structure according to claim 10, wherein the pipeline joint mounting structure further comprises a fastener; a mounting hole is formed in an outer surface of the end cover; the mounting hole is spaced apart from the through hole; one end of the fastener extends through the mounting hole and is connected to the connecting member.

12. The pipeline joint mounting structure according to claim 10 or 11, wherein along the axial direction of the connecting pipe, the end cover is flush with an outer surface of the fixing member body; or, along the axial direction of the connecting pipe, at least part of the end cover protrudes from the outer surface of the fixing member body.

13. The pipeline joint mounting structure according to any one of claims 8 to 12, wherein the pipeline joint mounting structure further comprises a sealing ring, a sealing groove surrounding the connecting pipe is formed at one end of the connecting member, the sealing ring is located in the sealing groove and abuts against the joint fixing member.

14. An energy storage device, comprising the pipeline joint mounting structure according to any one of claims 8 to 13, wherein the joint fixing member is part of a wall body of a box body in the energy storage device.
